(19) Europäisches Patentamt
European Patent Office
Office européen des brevets

(11) **EP 1 567 870 B1**

(12) **FASCICULE DE BREVET EUROPEEN**

(45) Date de publication et mention
de la délivrance du brevet:
**04.04.2012 Bulletin 2012/14**

(51) Int Cl.:
***G01P 3/52*** *(2006.01)*     ***F01L 9/04*** *(2006.01)*
***F16K 31/06*** *(2006.01)*     ***F16K 37/00*** *(2006.01)*

(21) Numéro de dépôt: **03796120.8**

(22) Date de dépôt: **01.12.2003**

(86) Numéro de dépôt international:
**PCT/FR2003/003541**

(87) Numéro de publication internationale:
**WO 2004/053502 (24.06.2004 Gazette 2004/26)**

(54) **CAPTEUR DE VITESSE D' UN ORGANE MOBILE**

GESCHWINDIGKEITSAUFNEHMER FÜR EIN BEWEGLICHES ORGAN

MOBILE MEMBER SPEED SENSOR

(84) Etats contractants désignés:
**AT BE BG CH CY CZ DE DK EE ES FI FR GB GR HU IE IT LI LU MC NL PT RO SE SI SK TR**

(30) Priorité: **02.12.2002 FR 0215130**

(43) Date de publication de la demande:
**31.08.2005 Bulletin 2005/35**

(73) Titulaire: **Valeo Systèmes de Contrôle Moteur**
**95892 Cergy Pontoise (FR)**

(72) Inventeurs:
• **MAERKY, Christophe**
**F-95310 Saint-Ouen L'Aumone (FR)**
• **JEWELL, Geraint**
**Sheffield S20 6QD (GB)**
• **CLARK, Richard**
**Sheffield S62PH (GB)**
• **STEWART, Paul**
**Sheffield S10 1LY (GB)**

(74) Mandataire: **Cardon, Nicolas**
**Valeo Systèmes de Contrôle Moteurs**
**14, avenue des Béguines**
**95800 Cergy St Christophe (FR)**

(56) Documents cités:
**WO-A-00/65204**     **WO-A-01/95348**
**FR-A- 2 812 683**     **US-A- 4 779 582**
**US-B1- 6 469 500**

## Description

La présente invention concerne un capteur de vitesse d'un organe mobile utilisable notamment dans les moteurs thermiques à soupapes pour mesurer la vitesse de déplacement des soupapes et/ou des organes mobiles d'actionnement de ces soupapes, plus particulièrement dans le cas des soupapes actionnées par des moyens électromagnétiques.

ARRIERE PLAN DE L'INVENTION

On connaît des actionneurs électromagnétiques de soupapes qui comportent des moyens électromagnétiques pour déplacer, entre une position de fermeture de la soupape et une position d'ouverture de la soupape, un organe mobile comportant une palette solidaire d'une tige reliée à la queue de la soupape. Les moyens électromagnétiques sont commandés via un asservissement notamment en fonction de la position de l'organe mobile et en tenant compte de la vitesse de l'organe mobile. La vitesse de l'organe mobile est obtenue par une différenciation numérique de la position fournie par un capteur de position tel qu'un capteur à effet Hall. Ce type de capteurs fonctionne grâce à des aimants permanents fixées à la tige. La mise en place de ces aimants est toutefois très délicate. La complexité de ces capteurs limite de plus leur fiabilité. En outre, ces capteurs de position comportent des éléments actifs qui doivent d'être alimentés en énergie électrique pour fonctionner. Les brevets US 4 779 582 et US 6 469 500 divulguent un capteur de vitesse selon le préambule de la revendication 1.

OBJET DE L'INVENTION

Un but de l'invention est de fournir un moyen d'évaluation de la vitesse d'un organe mobile, qui soit simple fiable et peu gourmand en énergie électrique.

BREVE DESCRIPTION DE L'INVENTION

A cet effet, on prévoit, selon l'invention, un capteur de vitesse d'un organe mobile selon la revendication 1.
Par singularité magnétique on entend une modification locale d'une caractéristique magnétique de l'organe mobile. Le flux magnétique fournit par l'aimant permanent dépend directement de la position de la singularité magnétique par rapport à l'aimant de sorte que le déplacement de cette singularité magnétique dans le fourreau va provoquer une variation du champ magnétique produit par l'aimant permanent. La variation du flux magnétique induit une tension dans la bobine qui est sensiblement proportionnelle à la vitesse de déplacement de la singularité magnétique dans le fourreau. Ainsi, le capteur de l'invention a une structure relativement simple et ne nécessite aucune alimentation en énergie électrique.
Par ailleurs, la différenciation numérique réalisée à partir du signal de position fourni par le capteur à effet Hall de l'art intérieur est généralement effectuée en soustrayant l'une de l'autre les deux positions mesurées à des instants donnés, puis en divisant le résultat de cette soustraction par l'intervalle de temps séparant les mesures des positions. Or, l'intervalle de temps a en général une durée très faible de sorte que la division par cet intervalle de temps occasionne une amplification des erreurs de mesure de la position engendrant une fluctuation importante de la vitesse calculée. Cette fluctuation rend la vitesse calculée difficilement exploitable, obligeant à recourir à un important traitement qui est relativement complexe et coûteux.
La singularité magnétique, la bobine et l'aimant permanent sont agencés pour que la bobine fournisse un signal linéaire indépendamment de la position de l'organe mobile.
En d'autres termes, la singularité magnétique, l'aimant permanent et la bobine sont agencés pour que le taux de variation du flux magnétique en fonction de la vitesse de l'organe mobile soit sensiblement constant quelle que soit la position de l'organe mobile (c'est-à-dire sur toute la course utile de celui-ci) et pour que la bobine délivre une information, à savoir la tension, qui est proportionnelle au taux de variation du flux magnétique (et donc à la vitesse de l'organe mobile) selon un rapport sensiblement constant sur toute la course utile de l'élément mobile. Le traitement à réaliser pour obtenir la vitesse est dès lors relativement simple et ne nécessite pas de ressources informatiques particulièrement importantes.
Le fourreau comprend deux bobines et un corps tubulaire dans lequel sont montés en opposition deux ensembles magnétiques coaxiaux, qui sont séparés par une entretoise et qui comprennent chacun une des bobines et à l'opposé de l'entretoise une des pièces polaires de telle manière que l'entretoise, les bobines et les pièces polaires forment un logement pour recevoir à coulissement la partie de l'organe mobile présentant la singularité magnétique.
Ceci permet d'obtenir une linéarité relativement bonne sut toute la course utile de l'organe mobile tout en conservant un capteur d'encombrement réduit.
Le fourreau comprend deux aimants permanents, chaque ensemble magnétique comportant un des aimants permanents et l'aimant permanent étant monté autour de la bobine.

Selon un premier mode de réalisation de la singularité magnétique, le moyen pour constituer la singularité magnétique comprend un insert ferromagnétique solidaire d'une partie amagnétique de l'organe mobile,

Ce mode de réalisation permet au capteur d'avoir une sensibilité relativement bonne.

Selon un deuxième mode de réalisation de la singularité magnétique, le moyen pour constituer la singularité magnétique comprend une gorge réalisée dans une partie ferromagnétique de l'organe mobile.

Ce mode de réalisation est particulièrement simple.

D'autres caractéristiques et avantages de l'invention ressortiront à la lecture d'un mode de mise en oeuvre particulier non limitatif de l'invention.

BREVE DESCRIPTION DES DESSINS

Il sera fait référence aux dessins annexés, parmi lesquels :

- la figure 1 est une vue schématique partielle en coupe d'une culasse d'un moteur thermique à quatre temps,
- la figure 2 est une vue schématique partielle en coupe du capteur de vitesse utilisé dans ce mode de mise en oeuvre de l'invention,
- la figure 3 est une vue schématique partielle d'une variante de réalisation de la singularité magnétique.

DESCRIPTION DETAILLEE DE L'INVENTION

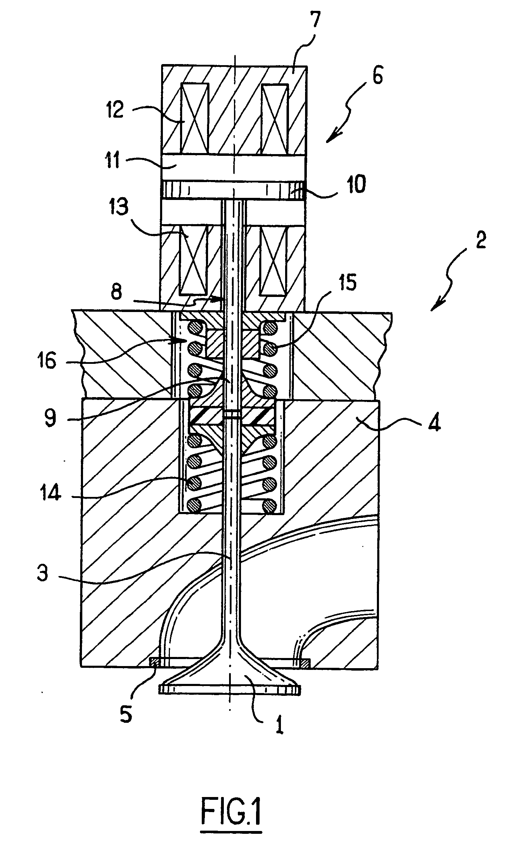

En référence à la figure 1, l'invention est ici décrite en application à l'actionnement d'une soupape 1 d'un moteur thermique portant la référence générale 2.

La soupape 1 possède une queue 3 et est montée sur une culasse 4 du moteur thermique 2 pour coulisser entre une position de fermeture dans laquelle la soupape 1 est appliquée contre un siège 5 de la culasse 4, et une position d'ouverture dans laquelle la soupape 1 est décollée du siège 5 de la culasse 4.

La soupape 1 est actionnée entre ces deux positions par l'intermédiaire d'un actionneur généralement désigné en 6 monté sur la culasse 4 du moteur thermique 2.

L'actionneur 6 comprend un corps 7 dans lequel est monté pour coulisser un organe mobile généralement désigné en 8 comportant une tige 9 en matériau amagnétique ayant une première extrémité agencée pour prendre appui sur une extrémité libre de la queue 3 de la soupape 1 et une deuxième extrémité solidaire d'une palette 10 reçue dans un logement 11 du corps 7 pour coulisser parallèlement à la tige 9.

Le corps 7 incorpore de façon connue en elle-même des moyens électromagnétiques de déplacement de l'organe mobile 8. Les moyens électromagnétiques comportent un électroaimant 12 de maintien de la palette 10 dans une première position correspondant à la position de fermeture de la soupape 1, et un électroaimant 13 de maintien de la palette 10 dans une position correspondant à la position d'ouverture de la soupape 1. Les électroaimants 12, 13 débouchent sur deux faces opposées du logement 11 du corps 7 et sont commandés de façon connue en elle-même via des moyens non représentés d'asservissement à partir d'un courant de consigne et d'une vitesse de déplacement de l'organe mobile 8, ainsi que de positions de celui-ci. Ce mode d'asservissement, connu en lui-même, est ici assuré par une unité dédiée, couramment appelée unité de contrôle soupape, qui reçoit les ordres d'ouverture et de fermeture de l'unité de contrôle moteur. En variante, l'unité de contrôle moteur peut assurer l'asservissement de l'actionneur électromagnétique.

L'actionneur 6 comprend également de façon connue en soi des moyens élastiques de déplacement de l'organe mobile 8. Les moyens élastiques de déplacement comprennent de façon connue en elle-même un ressort 14 de rappel de la soupape 1 dans sa position de fermeture et de la palette 10 vers sa première position et un ressort 15 de rappel de la palette 10 dans sa deuxième position.

Un capteur généralement désigné en 16 est monté sur la culasse 4 ou, comme ici, sur un élément solidaire de celle-ci comme le corps 7 de l'actionneur 6. Le capteur 16 forme un fourreau recevant à coulissement la tige 9 de l'organe mobile 8.

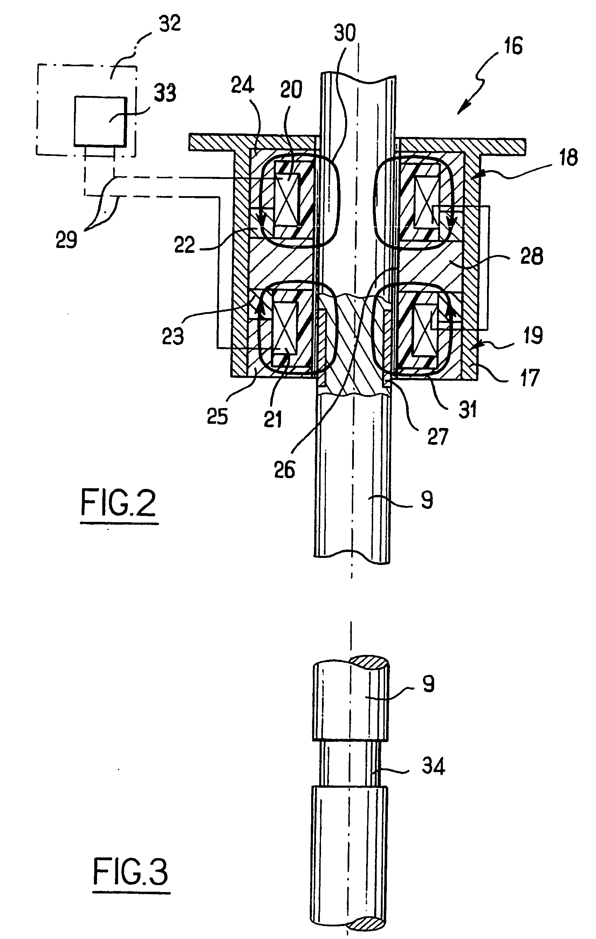

En référence à la figure 2, le capteur 16 comprend un corps tubulaire 17 en matériau amagnétique qui est pourvu d'une embase permettant sa fixation au corps 7 de l'actionneur 6.

Deux ensembles magnétiques généralement désignés en 18, 19 sont montés symétriquement et coaxialement dans le corps tubulaire 17 de part et d'autre d'une entretoise 28 annulaire en matériau ferromagnétique comme un acier doux.

Chaque ensemble magnétique 18, 19 comprend une bobine schématisée en 20, 21 annulaire, un aimant permanent 22, 23 annulaire monté coaxialement autour de la bobine 20, 21, et une pièce polaire 24, 25 annulaire disposée à l'opposé de l'entretoise 28.

Les aimants permanents 22, 23 sont disposés de manière à produire des champs magnétiques opposés suivant l'axe central du capteur. Ces champs sont schématisés en 30, 31 sur la figure 2.

Comme schématisé sur la figure 2, les bobines 20, 21 sont reliées électriquement en série l'une à l'autre de telle manière que l'une des bornes de la bobine 20 soit reliée à la borne de signe opposée de la bobine 21, les bornes restantes de la bobine 20 et de la bobine 21 étant alors reliées au module d'acquisition de données 33 de l'unité de contrôle soupape 32 par des conducteurs 29. Ces bornes peuvent également être reliées au module d'acquisition de données de l'unité de contrôle moteur. Les bobines 20, 21 sont agencées et dimensionnées (notamment nombre de tours de l'enroulement, diamètre du fil...) en particulier pour fournir une résolution et un rapport signal bruit suffisants pour permettre une exploitation ultérieure du signal. Par exemple, pour une résolution en vitesse de 0,05 $m.s^{-1}$, les bobines sont agencées pour fournir une tension de 5 volts par $m.s^{-1}$.

Les ensembles magnétiques 18, 19 sont ainsi montés en opposition.

L'entretoise 28, les bobines 20, 21 et les pièces polaires 24, 25 forment un logement 26 pour recevoir à coulissement la tige 9 de l'organe mobile 8.

Un insert ferromagnétique 27, ici un anneau en matériau ferromagnétique, est monté sur la tige 9 de l'organe mobile 8. L'insert ferromagnétique 27 constitue une singularité magnétique, c'est-à-dire une modification locale d'une caractéristique magnétique de la tige 9 de l'organe mobile de l'organe mobile.

L'insert ferromagnétique 27, les bobines 20, 21 et les aimants permanents 22, 23 sont agencés pour que les bobines 20, 21 fournissent un signal linéaire indépendamment de la position de l'organe mobile 8. En d'autres termes, l'insert ferromagnétique 27, les bobines 20, 21 et les aimants permanents 22, 23 sont agencés pour que le taux de variation du flux magnétique en fonction de la vitesse de l'organe mobile 8 soit sensiblement constant quelle que soit la position de l'organe mobile 8 (c'est-à-dire sur toute la course utile de celui-ci) et pour que les bobines 20, 21 délivrent une tension qui est proportionnelle au taux de variation du flux magnétique (et donc à la vitesse de l'organe mobile) selon un rapport sensiblement constant sur toute la course utile de l'élément mobile.

Lors du fonctionnement du moteur, le mouvement de coulissement de l'organe mobile 8 provoque le déplacement de la soupape 1 entre ses positions d'ouverture et de fermeture. L'insert ferromagnétique 27 solidaire de la tige 9 de l'organe mobile 8 perturbe le champ magnétique fourni par l'aimant permanent 22, 23 à proximité duquel il se trouve (ou les champs magnétiques des deux aimants) de sorte que le déplacement de l'insert ferromagnétique 27 va engendrer des variations des flux magnétiques produits par les aimants permanents 22, 23.

Cette variation du flux magnétique va induire dans les bobines 20, 21 une variation de tension qui est proportionnelle à la vitesse de déplacement de l'insert ferromagnétique 27 et donc à la vitesse de déplacement de l'organe mobile 8. Compte tenu du branchement des bobines l'une à l'autre, c'est la différence entre la tension dans là bobine 20 et la tension dans la bobine 21 qui est transmise au module d'acquisition.

La tension est mesurée périodiquement selon un intervalle de temps déterminé par le module d'acquisition de données et est ensuite utilisée par l'unité de contrôle soupape où elle est convertie (multiplication par le facteur de proportionnalité) pour être exploitable en tant que vitesse de l'organe mobile 8.

Pour améliorer la linéarité, il est possible de jouer sur les dimensions axiales des bobines 20, 21, les pièces polaires 24, 25, l'entretoise 28 et de l'insert ferromagnétique 27. A titre d'exemple, les dimensions axiales de ces éléments sont de :

- 6,75 mm pour les bobines 20, 21,
- 1 mm pour chaque pièce polaire 24, 25 d'extrémité,
- 4,5 mm pour l'entretoise 28,
- 7 mm pour l'insert ferromagnétique 27.

Des positions de l'organe mobile 8 sont obtenues à partir de la vitesse de déplacement de celui-ci.

Pour illustrer l'obtention de ces positions, nous allons considérer une série de mesures de vitesse effectuées à des instants $t_n$ séparés par des intervalles déterminés $\Delta t$ depuis une position connue de l'organe mobile 8, telle que sa première ou sa deuxième position.

A l'instant $t_0$, l'organe mobile 8 est par exemple dans sa première position, soit $x_0$, où nous savons que sa vitesse $v_0$ est nulle.

A l'instant $t_1$, il est effectué une mesure de la vitesse $v_1$ de l'organe mobile 8. La position $x_1$ de l'organe mobile 8 à l'instant $t_1$ est évaluée en ajoutant à $x_0$ l'estimation de la distance parcourue par l'organe mobile 8 pendant l'intervalle de temps $\Delta t$ soit le produit de la vitesse $v_1$ et de l'intervalle de temps $\Delta t$. On obtient alors la formule $x_1 = x_0 + v_1 {}^*\Delta t$.

Il est alors possible à partir de la nouvelle position connue $x_1$ et de la mesure de la vitesse $v_2$ à l'instant $t_2$, d'évaluer la position $x_2$ de l'organe mobile 8 à l'instant $t_2$ en appliquant la formule $x_2 = x_1 + v_2{}^*\Delta t$.

On utilise ainsi la formule générale suivante :

$$x_{n+1} = x_n + v_{n+1}{}^*(t_{n+1}-t_n)$$

qui correspond à une intégration de la vitesse en fonction du temps et à partir d'une position $x_n$ connue ou estimée par calcul.

Ce procédé d'évaluation de positions permet de n'utiliser qu'un seul capteur qui va permettre d'obtenir une mesure précise de la vitesse de l'organe mobile 8 à partir de laquelle, grâce au procédé, il sera possible de calculer de manière relativement simple et fiable les positions de l'organe mobile 8.

Ces vitesses et positions sont ensuite utilisées par l'unité de contrôle moteur notamment pour commander les moyens électromagnétiques de l'actionneur 6.

Dans la variante de la figure 3, la tige 9 de l'organe mobile 8 est réalisée en matériau ferromagnétique et comporte une gorge externe 34 qui constitue une singularité magnétique, c'est-à-dire une modification locale d'une caractéristique magnétique de la tige 9 de l'organe mobile de l'organe mobile.

Comme dans le mode de réalisation précédent, la gorge externe 34 perturbe le champ magnétique fourni par l'aimant permanent 22, 23 à proximité duquel il se trouve (ou les champs magnétiques des deux aimants) de sorte que le déplacement de la gorge externe 34 va engendrer des variations des flux magnétiques produits par les aimants permanents 22, 23.

Cette variation du flux magnétique va induire dans les bobines 20, 21 une variation de tension qui est proportionnelle à la vitesse de déplacement de la gorge externe 34 et donc à la vitesse de déplacement de l'organe mobile 8.

Bien entendu, l'invention n'est pas limitée au mode de réalisation décrit et on peut y apporter des variantes de réalisation sans sortir du cadre de l'invention tel que défini par les revendications.

En particulier, le capteur est également utilisable avec les actionneurs électromagnétiques ne comportant qu'un électroaimant et par exemple ceux utilisant une palette basculante.

En outre, bien que le capteur ait été décrit en application à la mesure de vitesse d'un organe mobile d'actionneur électromagnétique de soupape, le capteur est également utilisable pour mesurer la vitesse de la soupape elle-même, ou d'un organe mobile allongé ou plus généralement de tout organe mobile d'un dispositif quel qu'il soit et pas seulement dans le domaine automobile.

En outre, les dimensions axiales des constituants peuvent être modifiées, par exemple pour modifier la sensibilité du capteur ou pour respecter un encombrement donné.

L'organe mobile peut comprendre une portion ferromagnétique et une portion amagnétique pour constituer la singularité magnétique.

Bien que le capteur ait été décrit avec deux aimants permanents, le capteur peut, selon une variante ne faisant pas partie de l'invention revendiquée, comprendre un seul aimant permanent annulaire radialement polarisé et disposé autour d'une entretoise, deux bobines annulaires disposées coaxialement de part et d'autre de l'aimant permanent et de l'entretoise, et des pièces polaires annulaires disposées du côté des bobines opposé à l'aimant permanent. Le capteur peut également comprendre un seul aimant permanent annulaire axialement polarisé et disposé autour d'une bobine annulaire. Il est possible d'utiliser plusieurs moyens pour améliorer la linéarité de la mesure sur toute la course de l'organe mobile par exemple en prévoyant des dimensions axiales de la bobine, de l'aimant et de la singularité magnétique relatives par rapport à la course de l'organe mobile de telle manière que la mesure de vitesse soit réalisée dans une zone du capteur ou le taux de variation du champ magnétique en fonction de la vitesse et la réponse de la bobine ou des bobines sont relativement constants, soit en prévoyant des formes particulières notamment de la bobine afin d'éviter les effets de bords.

D'autres modes d'intégration peuvent également être utilisés pour obtenir les positions de l'organe mobile à partir des vitesses fournies par le capteur. Ainsi, par exemple, l'intégration peut être réalisée à partir d'une moyenne des vitesses sur l'intervalle de temps considéré en utilisant la formule suivante :

$$x_{n+1} = x_n + ((v_{n+1}+v_n)/2)*(t_{n+1}-t_n).$$

## Revendications

**1.** Capteur de vitesse d'un organe mobile (8), comprenant un moyen (27 ; 34) pour constituer une singularité magnétique sur une partie (9) de l'organe mobile et un fourreau recevant à coulissement cette partie et comportant au moins une bobine (20, 21) annulaire et un aimant permanent (22, 23) annulaire disposés coaxialement entre des pièces polaires (24, 25) annulaires,

**caractérisé en ce que** la singularité magnétique (27 ; 34), la bobine (20, 21) et l'aimant permanent (22, 23) sont agencés pour que la bobine fournisse un signal linéaire indépendamment de la position de l'organe mobile (8), le fourreau comprenant deux bobines (20, 2 1) et un corps tubulaire (17) dans lequel sont montés deux ensembles magnétiques (18, 19) coaxiaux, qui sont séparés par une entretoise (28) et qui comprennent chacun une des bobines et à l'opposé de l'entretoise une des pièces polaires (24, 25) de telle manière que l'entretoise, les bobines et les pièces polaires forment un logement (26) pour recevoir à coulissement la partie (9) de l'organe mobile (8) présentant la singularité magnétique (27 ; 34) et

le fourreau comprenant deux aimants permanents (22, 23) chaque ensemble magnétique (18, 19) comportant un des aimants permanents et l'aimant permanent étant monté autour de la bobine (20, 21).

**2.** Capteur selon la revendication 1, **caractérisé en ce que** le moyen pour constituer la singularité magnétique comprend un insert ferromagnétique (27) solidaire d'une partie amagnetique de l'organe mobile (8).

**3.** Capteur selon la revendication 1, **caractérisé en ce que** le moyen pour constituer la singularité magnétique comprend une gorge externe (34) réalisée dans une partie ferromagnétique de l'organe mobile (8).

## Claims

**1.** Speed sensor for a mobile member (8), comprising a means (27; 34) for forming a magnetic singularity on a part (9) of the mobile member and a sheath receiving this part by sliding and comprising at least one annular coil (20, 21) and an annular permanent magnet (22, 23) arranged coaxially between the annular pole pieces (24, 25), **characterized in that** the magnetic singularity (27; 34), the coil (20, 21) and the permanent magnet (22, 23) are arranged for the coil to supply a linear signal independently of the position of the mobile member (8),

the sheath comprising two coils (20, 21) and a tubular body (17) in which are mounted in opposition two coaxial magnetic assemblies (18, 19), which are separated by a spacer (28) and each of which comprises one of the coils and, opposite the spacer, one of the pole pieces (24, 25) in such a way that the spacer, the coils and the pole pieces form a housing (26) to receive the part (9) of the mobile member (8) having the magnetic singularity (27; 34) by sliding, and

the sheath comprising two permanent magnets (22, 23), each magnetic assembly (18, 19) comprising one of the permanent magnets and the permanent magnet being mounted around the coil (20, 21).

**2.** Sensor according to Claim 1, **characterized in that** the means for forming the magnetic singularity comprises a ferromagnetic insert (27) attached to a non-magnetic part of the mobile member (8).

**3.** Sensor according to Claim 1, **characterized in that** the means for forming the magnetic singularity comprises an external groove (34) produced in a ferromagnetic part of the mobile member (8).

## Patentansprüche

**1.** Geschwindigkeitssensor eines beweglichen Organs (8), der eine Einrichtung (27; 34), um eine magnetische Singularität auf einem Teil (9) des beweglichen Organs zu bilden, und ein Mantelrohr enthält, das diesen Teil gleitend aufnimmt und mindestens eine ringförmige Spule (20, 21) und einen ringförmigen Dauermagnet (22, 23) aufweist, die koaxial zwischen ringförmigen Polstücken (24, 25) angeordnet sind,

**dadurch gekennzeichnet, dass** die magnetische Singularität (27; 34), die Spule (20, 21) und der Dauermagnet (22, 23) eingerichtet sind, damit die Spule ein lineares Signal unabhängig von der Stellung des beweglichen Organs (8) liefert,

wobei das Mantelrohr zwei Spulen (20, 21) und einen rohrförmigen Körper (17) enthält, in den zwei koaxiale magnetische Einheiten (18, 19) gegenphasig montiert sind, die durch einen Abstandshalter (28) getrennt werden und die je eine der Spulen und entgegengesetzt zum Abstandshalter eines der Polstücke (24, 25) enthalten, so dass der Abstandshalter, die Spulen und die Polstücke eine Aufnahme (26) formen, um den Teil (9) des beweglichen Organs (8) gleitend aufzunehmen, der die magnetische Singularität (27; 34) aufweist, und

das Mantelrohr zwei Dauermagnete (22, 23) enthält, wobei jede magnetische Einheit (18, 19) einen der Dauermagnete aufweist und der Dauermagnet um die Spule (20, 21) montiert ist.

**2.** Sensor nach Anspruch 1, **dadurch gekennzeichnet, dass** die Einrichtung, um die magnetische Singularität zu bilden, einen ferromagnetischen Einsatz (27) enthält, der fest mit einem unmagnetischen Bereich des beweglichen Organs (8) verbunden ist.

**3.** Sensor nach Anspruch 1, **dadurch gekennzeichnet, dass** die Einrichtung, um die magnetische Singularität zu bilden, eine äußere Rille (34) enthält, die in einem ferromagnetischen Bereich des beweglichen Organs (8) hergestellt ist.

FIG.1

FIG.2

FIG.3

**EP 1 567 870 B1**

## RÉFÉRENCES CITÉES DANS LA DESCRIPTION

**Documents brevets cités dans la description**

- US 4779582 A

- US 6469500 B